# EUROPEAN PATENT APPLICATION

(11) **EP 4 776 391 A1**
(43) Date of publication of application: **15.07.2026**
(21) Application number: 26150113.4
(22) Date of filing: 02.01.2026
(51) Int. Cl.: H01M 10/658, H01M 10/613, H01M 50/291, H01M 50/293, H01M 10/6555

(54) **BATTERY ASSEMBLY AND METHOD FOR REDUCING RISK OF THERMAL RUNAWAY THEREIN**

(30) Priority: 09.01.2025 KR 20250003240
(71) Applicant: SK On Co., Ltd., Seoul 03161 (KR)
(72) Inventor: KIM, Su A, 34124 Daejeon (KR); KANG, Yu Bin, 34124 Daejeon (KR); SON, Jin Woo, 34124 Daejeon (KR)
(74) Representative: Stolmár & Partner Patentanwälte PartG mbB

(57) **Abstract**

The present disclosure relates to a battery assembly and a method for reducing risk of thermal runaway therein. A battery assembly according to one embodiment of the present disclosure comprises at least two battery cells; and a barrier disposed between the two battery cells, wherein the barrier comprises a sheet-shaped blocking layer, a surface pressure layer stacked on at least one surface of the blocking layer, the surface pressure layer comprises a first region in contact with the blocking layer and a second region which is a region other than the first region, and a protective layer may be stacked on at least a portion of the second region.

## Description

### BACKGROUND OF THE INVENTION

### 1. Field

The present disclosure relates to a battery assembly.

### 2. Description of the Related Art

A secondary battery is a battery configured to store electrical energy as chemical energy and to be reused multiple times through charging and discharging. To obtain desired output and performance, a plurality of such secondary batteries may be grouped and manufactured as a battery assembly. The battery assembly may include, within an internal receiving space, a plurality of secondary batteries, that is, a plurality of battery cells.

When a thermal runaway event occurs in any one of the plurality of battery cells accommodated in the battery assembly, the heat or flame generated from the corresponding cell can easily propagate to adjacent cells, which, due to the characteristics of the secondary battery, may cause a critical safety problem.

Meanwhile, when the battery is used for a long period of time, at least some of the plurality of battery cells may expand during charging and discharging due to gas generation caused by side reactions, and such a phenomenon may be referred to as swelling. The swelling phenomenon occurring in any one battery cell may cause physical damage to adjacent cells.

In order to solve such problems, attempts have been made to insert a flame-resistant member or a surface pressure member between adjacent battery cells. However, the insertion of such members may additionally increase the volume or weight of the battery assembly.

### SUMMARY OF THE INVENTION

According to one aspect of the present disclosure, a barrier for a battery assembly capable of implementing high heat or flame blocking performance even with a thin thickness and simultaneously effectively mitigating the influence caused by a swelling phenomenon can be provided.

According to another aspect of the present disclosure, a battery assembly having improved safety and stability, while ensuring manufacturability and economic efficiency, and simultaneously having high energy density, can be provided.

Meanwhile, the present disclosure can be widely applied to fields of green technology such as electric vehicles (EVs), battery charging stations, energy storage systems (ESS), photovoltaics, and wind power generation that utilize batteries. In addition, the present disclosure can be used in eco-friendly mobility, including electric vehicles and hybrid vehicles, for preventing climate change by suppressing air pollution and greenhouse gas emissions.

As a technical means to achieve the technical objects, a battery assembly according to the present disclosure comprises at least two battery cells; and a barrier disposed between the two battery cells, wherein the barrier comprises a sheet-shaped blocking layer, a surface pressure layer stacked on at least one surface of the blocking layer, the surface pressure layer comprises a first region in contact with the blocking layer and a second region which is a region other than the first region, and a protective layer may be stacked on at least a portion of the second region.

In the battery assembly according to one embodiment, the protective layer may have a thickness of about 0.15 mm to about 0.5 mm.

In the battery assembly according to one embodiment, the protective layer comprises a flame-retardant layer, and the flame-retardant layer may have a thickness of about 0.1 mm to about 0.4 mm.

In the battery assembly according to one embodiment, the flame-retardant layer comprises at least one of an inorganic material fiber selected from the group consisting of silica fiber, alumina fiber, silica-alumina fiber, glass fiber, ceramic fiber, basalt fiber, and any combination thereof and an organic material fiber comprising an aramid fiber.

In the battery assembly according to one embodiment, a thermal conductivity of the flame-retardant layer may be about 0.02 W/m·K or less.

In the battery assembly according to one embodiment, the protective layer may comprise an expansion layer comprising a material selected from the group consisting of expandable graphite, a silicate, phosphorus-based flame retardant, or any combination thereof.

In the battery assembly according to one embodiment, the expansion layer may have a thickness of about 0.02 mm to about 0.1 mm.

In the battery assembly according to one embodiment, the expansion layer may expand to a volume 300% to 30,000% relative to its volume at room temperature when exposed to a temperature of 200°C to 300°C.

In the battery assembly according to one embodiment, a thermal conductivity of the surface pressure layer may be about 0.1 W/m·K or less.

In the battery assembly according to one embodiment, the blocking layer may comprise one or both of a fiber and an inorganic material.

In the battery assembly according to one embodiment, the blocking layer may have a thickness of about 0.1 mm to about 1.5 mm.

In the battery assembly according to one embodiment, the surface pressure layer may have a 20% compression force deflection (CFD) of about 23.21 kPa or less.

In the battery assembly according to one embodiment, the surface pressure layer may have a thickness of about 0.5 mm to about 4.0 mm.

In the battery assembly according to one embodiment, the surface pressure layer may comprise a material from the group consisting of silicon, polyurethane (PU), acrylic, ethylene-propylene diene monomer (EPDM), ethylene vinyl acetate (EVA), isoprene rubber, butadiene-based rubber, chloroprene rubber, butyl rubber, and any combination thereof.

In the battery assembly according to one embodiment, the surface pressure layer may comprise foamed silicon.

In the battery assembly according to one embodiment, the combined thickness of the blocking layer, protective layer, and surface pressure layer may be about 1.0 mm to about 5.5 mm.

In the battery assembly according to one embodiment, the surface pressure layer may be a first surface pressure layer, the protective layer may be a first protective layer, the blocking layer may be disposed between the first surface pressure layer and a second surface pressure layer, and the second surface pressure layer may be disposed between the blocking layer and a second protective layer.

In the battery assembly according to one embodiment, further comprising a third protective layer disposed between the first surface pressure layer and the blocking layer, and a fourth protective layer disposed between the blocking layer and the second surface pressure layer.

A method of reducing the risk of thermal runaway in a battery assembly according to the present disclosure comprises interposing a barrier between a two battery cells of the battery assembly, wherein the barrier comprises a sheet-shaped blocking layer, a surface pressure layer stacked on at least one surface of the blocking layer, the surface pressure layer comprises a first region in contact with the blocking layer and a second region which is a region other than the first region and a protective layer stacked on at least a portion of the second region.

In the method according to one embodiment, wherein the combined thickness of the blocking layer, protective layer, and surface pressure layer is about 1.0 mm to about 5.5 mm.

According to one aspect of the present disclosure, a barrier for a battery assembly capable of implementing high heat or flame blocking performance even with a thin thickness and simultaneously effectively mitigating the influence caused by a swelling phenomenon can be provided.

According to another aspect of the present disclosure, a battery assembly having improved safety and stability while ensuring manufacturability and economic efficiency, and simultaneously having high energy density, can be provided.

Meanwhile, the present disclosure can be widely applied to green technology fields such as electric vehicles (EVs), battery charging stations, energy storage systems (ESS), photovoltaics, and wind power generation that utilize batteries.

In addition, the present disclosure can be used in eco-friendly mobility, including electric vehicles and hybrid vehicles, for preventing climate change by suppressing air pollution and greenhouse gas emissions.

### BRIEF DESCRIPTION OF THE DRAWINGS

FIG. 1 is a view illustrating an example of an arrangement relationship between a battery cell and a barrier according to one embodiment of the present disclosure.
FIG. 2 is a view illustrating an example of a cross-section for explaining a stacking aspect of the barrier according to one embodiment of the present disclosure.
FIG. 3 is a view illustrating an example in which the cross-section shown in FIG. 2 is exploded and shown by each layer.
FIG. 4 is a view illustrating an example of a cross-section of the barrier according to another embodiment of the present disclosure.
FIG. 5 is a view illustrating an example in which the cross-section shown in FIG. 4 is exploded and shown by each layer.
FIG. 6 is a view illustrating an example of a cross-section of the barrier according to still another embodiment of the present disclosure.
FIG. 7 is a view illustrating an example of a battery assembly according to one embodiment of the present disclosure.
FIG. 8 is a view illustrating an example of a cross-section of the barrier according to Example 2.
FIG. 9 is a view illustrating an example of a cross-section of the barrier according to a Comparative Example.
FIG. 10 is a graph showing test results comparing rear surface temperatures of the barriers of the Examples and the Comparative Example.

### DETAILED DESCRIPTION

The embodiments described in the present specification may be modified into various other forms, and therefore, the technology according to one embodiment is not limited to the embodiments described below. Furthermore, throughout the specification, the expressions "comprise," "include," "contain," or "have" of a component mean that other components are not excluded unless specifically stated otherwise, and may further include other components, materials, or processes that are not additionally listed.

In the present specification, the term "identical" or "uniform" may mean that they are identical or uniform within an allowable error range unless otherwise specified. For example, when components or physical property measurement values are described as being identical, it can mean not only that the two compared objects are completely the same, but also that they are the same within an error range. Meanwhile, when physical property measurement values are described as identical, it may mean that a difference in measured values between objects is less than about 5%, specifically less than 3%, and more specifically less than 1%.

In the present specification, the expressions that an angle formed between two objects is perpendicular, parallel, or aligned with each other may include not only being geometrically perpendicular or parallel, but also being within a slight error range.

In the present specification, a numerical range includes its lower and upper limits, all values within the range, increments logically derived from the shape and width of the defined range, all values doubly limited, and all possible combinations of the upper and lower limits of numerically defined ranges limited in different forms.

Unless otherwise specifically defined in the present specification, the term "about" may be considered to mean a value within 30%, 25%, 20%, 15%, 10%, or 5% of the specified value.

In the present specification, the use of terms such as "first," "second," and "third" before a component is merely for distinguishing between components and has no relation to the order, importance, or hierarchical relationship among the components. For example, an invention including only a second component without a first component may also be implemented.

In the present specification, the "X direction," "Y direction," and "Z direction" may be described based on a spatial orthogonal coordinate system defined by mutually perpendicular X-, Y-, and Z-axes. Unless otherwise specified, the Z direction (or third direction) may refer to a height direction, the X direction (or first direction) may refer to one of directions perpendicular to the height direction, and the Y direction (or second direction) may refer to a direction perpendicular to both the Z direction and the X direction. However, the X, Y, and Z directions mentioned below are described to aid understanding of the present disclosure, and it is of course possible to define each direction differently depending on the reference point.

In the present specification, the term "cross-section" may refer to a surface observed when a stacked object is cut in a direction perpendicular to a stacking surface.

In the present specification, the term "electrically connected" may mean, without limitation, all connection methods by which a plurality of objects can be electrically communicated with each other, and the plurality of objects may be directly connected or connected through a third object, among various possible configurations.

In the present specification, a configuration defined as "~portion" ("~bu" in Korean) may mean, without limitation, a single component or a set of two or more identical or similar components having a common functional aspect, and the set of components may be configured by an unlimited combination of hardware and/or software.

In the present specification, the term "disposed" may mean, without limitation, a positional relationship in which one object can be positioned adjacent to another object. As non-limiting examples, it may refer to coating one object on another object; bonding one object to another via an adhesive; attaching one object to another by applying heat or pressure; simply positioning one object such that at least a portion of one object comes into contact with at least a portion of another object within a certain space; or fixing one object to another.

In the present specification, the expression that one object "covers" another object may mean, without limitation, that one object is disposed at least adjacent to another object so as to have a functional or structural relationship capable of blocking or mitigating any external factor that may be applied to the other object.

In the present specification, the term "secondary battery" refers to a battery that generates electrical energy by oxidation and reduction reactions when ions-specifically cations such as lithium ions-are inserted into and released from a positive electrode and a negative electrode. Specifically, the "secondary battery" may refer to any one of a lithium cobalt battery, a lithium high-nickel battery, a lithium iron phosphate battery, a lithium ion battery, a lithium polymer battery, a lithium sulfur battery, a nickel hydrogen battery, a nickel cadmium battery, a sodium battery, or an all-solid-state battery. For example, the term "secondary battery" used in the present specification may refer to a lithium ion secondary battery, but is not necessarily limited thereto.

In the present specification, the term "battery assembly" may be a collective concept referring to a battery module or a battery pack. Therefore, the battery assembly according to the present disclosure may refer not only to a battery module but also to a battery pack that accommodates a plurality of battery cells while omitting a battery module structure, such as a so-called Cell to Pack (CTP) configuration.

In the present specification, the term "battery cell" may refer to a basic unit of a secondary battery capable of charging and discharging electrical energy, including an electrode assembly, an electrolyte, and an exterior material as main components.

Hereinafter, the present disclosure will be described in detail. However, it is merely illustrative and the present disclosure is not limited to the specific embodiments described by way of example.

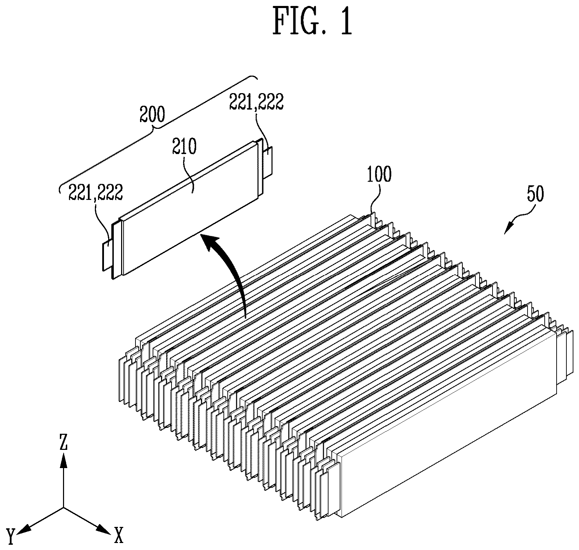

FIG. 1 is a view illustrating an example of an arrangement relationship between a battery cell and a barrier according to one embodiment of the present disclosure.

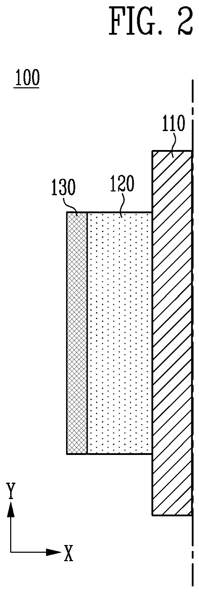

FIG. 2 is a view illustrating an example of a cross-section for explaining a stacking aspect of the barrier according to one embodiment of the present disclosure.

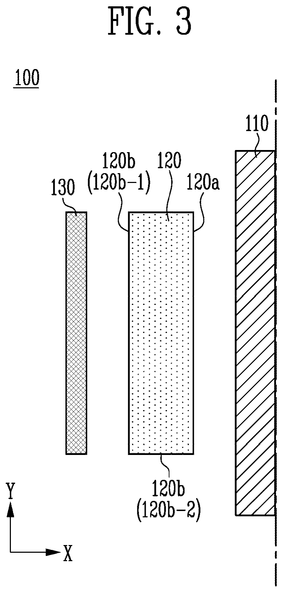

FIG. 3 is a view illustrating an example in which the cross-section shown in FIG. 2 is exploded and shown by each layer.

A battery assembly 10 according to one embodiment of the present disclosure includes a plurality of stacked battery cells 200; and a barrier 100 disposed between at least one pair of adjacent battery cells 200 among the plurality of battery cells 200, wherein the barrier 100 includes a sheet-shaped blocking layer 110 and a surface pressure layer 120 stacked on at least one surface of the blocking layer 110, the surface pressure layer 120 includes a first region 120a in contact with the blocking layer 110 and a second region 120b which is a region other than the first region 120a, and a protective layer 130 may be stacked on at least a portion of the second region 120b.

In one embodiment, the battery assembly 10 may include a plurality of stacked battery cells 200 and a barrier 100 disposed between at least one pair of adjacent battery cells 200 among the plurality of battery cells 200.

In one embodiment, each of the plurality of battery cells 200 may include a cell case 210, which is an exterior material that accommodates an electrode assembly (not shown) for generating or storing electrical energy, and lead tab portions 221 and 222 protruding outward from the cell case 210. The cell case 210 may include, in an internal space thereof, the electrode assembly (not shown) electrically connected to the lead tab portions 221 and 222, the electrode assembly being configured to generate and store electrical energy inside the cell case 210.

In one embodiment, the electrode assembly (not shown) may include a positive electrode and a negative electrode.

Meanwhile, according to an exemplary embodiment, the electrode assembly (not shown) may further include a separator configured to prevent an electrical short circuit between the positive electrode and the negative electrode and to allow ionic flow. The separator may include, for example, a porous polymer film or a porous nonwoven fabric.

In such an embodiment, the electrode assembly (not shown) may have a structure in which the positive electrode, the separator, and the negative electrode are stacked along a predetermined stacking direction. The positive electrode, separator, and negative electrode may be stacked in a stacking type, stack-folding type, or Z-stacking type manner.

In another embodiment, the electrode assembly (not shown) may have a structure in which the positive electrode, separator, and negative electrode are sequentially stacked and then wound. Such a wound structure of the electrode assembly (not shown) may be referred to as a jelly-roll-type electrode assembly (not shown), for example.

According to an exemplary embodiment, each battery cell 200 may include an electrolyte within the cell case 210 to immerse the electrode assembly (not shown).

Meanwhile, according to another exemplary embodiment, each battery cell 200 may include a solid electrolyte layer containing a solid-state electrolyte. In such an embodiment, the electrode assembly (not shown) may have a structure in which the positive electrode, the solid electrolyte layer, and the negative electrode are stacked along a predetermined stacking direction.

According to an exemplary embodiment, when referring to FIG. 1, the cell case 210 may be a film-type exterior material, and at least a portion thereof may have a pouch shape in which edges are sealed. That is, each battery cell 200 may be a pouch-type battery cell. However, this is merely an example, and as shown in FIG. 1, the battery cell 200 may alternatively be a prismatic or cylindrical battery cell.

Referring again to FIG. 1, the plurality of stacked battery cells 200 may be stacked along a predetermined stacking direction. Meanwhile, at least one barrier 100 may be disposed between at least one pair of adjacent battery cells 200 among the plurality of battery cells 200. Such a stack of battery cells 200 and barriers 100 may be defined as a battery cell stack 50.

For example, based on what is illustrated in FIG. 1, a stacking direction of the plurality of battery cells 200 and the barrier 100 forming the battery cell stack 50 may be an X-direction.

Meanwhile, in FIG. 1, a battery cell stack 50 is illustrated in which one barrier 100 is disposed for every three battery cells 200 among the plurality of battery cells 200. However, this is arbitrarily illustrated for convenience of explanation, and the battery cell stack 50 may be configured in various arrangement forms as needed.

FIG. 2 illustrates an example of a cross-section of the barrier 100 according to one embodiment, and FIG. 3 illustrates an example in which the cross-section shown in FIG. 2 is exploded by each layer. Referring to FIGS. 2 and 3, in one embodiment, the barrier 100 includes a sheet-shaped blocking layer 110 and a surface pressure layer 120 stacked on at least one surface of the blocking layer 110. The surface pressure layer 120 includes a first region 120a in contact with the blocking layer 110 and a second region 120b which is a region other than the first region 120a, and a protective layer 130 may be stacked on at least a portion of the second region 120b.

Meanwhile, in the embodiment of the barrier 100 illustrated in FIGS. 2 and 3, the area of the blocking layer 110 is depicted as being larger than those of the surface pressure layer 120 and the protective layer 130. Specifically, both ends of the blocking layer 110 in the Y direction are shown as being exposed outward. However, this is merely illustrative, and in the barrier 100 according to the present disclosure, the shape and area of each layer are not particularly limited so long as they do not depart from the definitions of the present disclosure. Furthermore, the thickness, shading, and color of each layer illustrated in FIGS. 2 and 3 are all arbitrary for ease of explanation, and therefore, the barrier 100 defined in the present disclosure is, of course, not limited thereby. The same applies to all drawings described hereinafter.

In one embodiment, a thickness of the barrier 100 may be 1.0 mm to 5.5 mm. In a specific embodiment, the thickness of the barrier 100 may be 2.0 mm to 5.5 mm, more specifically 3.0 mm to 5.5 mm, more specifically 4.0 mm to 5.0 mm, more specifically 4.3 mm to 5.0 mm, and more specifically 4.3 mm to 4.7 mm.

When the thickness of the barrier 100 is less than the above-described numerical range, the effect of blocking heat or flame propagation to an adjacent cell when a thermal runaway event occurs in the battery assembly 10 may be insignificant, and the effect of relieving pressure applied to an adjacent cell when a swelling phenomenon occurs in one cell may also be insufficient. Meanwhile, when the thickness of the barrier 100 exceeds the above-described numerical range, it is difficult to expect a significant improvement in the above-described propagation-blocking or pressure-relief effects compared to the increase in thickness or weight of the barrier 100, and thus, the energy efficiency per volume or weight of the battery assembly 10 including the same may deteriorate.

In one embodiment, the blocking layer 110 may be provided in a sheet form. In one embodiment, the blocking layer 110 may have thermal insulation, heat resistance, and flame resistance so as to perform a function of suppressing the propagation of heat or flame. Furthermore, the blocking layer 110 may be configured to maintain the shape and rigidity of the barrier 100.

In one embodiment, the blocking layer 110 may include at least one of a fiber and an inorganic material.

In one embodiment, the fiber may include at least one of an inorganic material fiber and an organic material fiber.

In a specific embodiment, the inorganic material fiber may include at least one selected from the group consisting of silica fiber, alumina fiber, silica-alumina fiber, glass fiber, ceramic fiber, and basalt fiber, and the organic material fiber may include an aramid fiber.

According to an exemplary embodiment, the fiber may have the form of a long fiber or a short fiber. When the fiber has the form of a long fiber, the blocking layer 110 may include a woven structure of the fibers. Through the woven structure, the blocking layer 110 may include a woven or NCF (non-crimp fabric) textile, but is not necessarily limited thereto. Meanwhile, the short fiber may correspond to a fiber not including a long fiber. Furthermore, the diameter, length, and other properties of the long fiber and/or short fiber may not be particularly limited.

In one embodiment, the inorganic material may include at least one selected from the group consisting of mica, silica, alumina, aluminum hydroxide, magnesium hydroxide, wollastonite, and aerogel. In one embodiment, the inorganic material may include mica.

In an exemplary embodiment, the inorganic material may refer to mica. In such an embodiment, the blocking layer 110 may be formed of a mica sheet.

In one embodiment, a thickness of the blocking layer 110 may be 0.1 mm to 1.5 mm.

In a specific embodiment, a thickness of the blocking layer 110 may be 0.2 mm to 1.3 mm, more specifically 0.3 mm to 1.2 mm, more specifically 0.4 mm to 1.1 mm, more specifically 0.5 mm to 1.0 mm, and more specifically 0.6 mm to 1.0 mm.

When the thickness of the blocking layer 110 is less than the above-described numerical range, the effect of blocking the propagation of heat or flame to an adjacent cell when a thermal runaway event occurs in the battery assembly 10 may be insignificant. Meanwhile, when the thickness of the blocking layer 110 exceeds the above-described numerical range, it may be difficult to expect a significant improvement in the propagation blocking effect compared to the increase in the thickness or weight of the blocking layer 110, resulting in deterioration of the energy efficiency per volume or weight of the battery assembly 10 including the same. Furthermore, when the thickness of the blocking layer 110 becomes excessive relative to the total thickness of the barrier 100, the effect of mitigating the pressure applied to adjacent cells when a swelling phenomenon occurs may be degraded.

In one embodiment, when a swelling phenomenon occurs in any one of the battery cells 200 due to continuous use of the battery, the surface pressure layer 120 may perform a surface pressure function of relieving or offsetting the pressure applied to adjacent cells due to such physical deformation. To this end, the surface pressure layer 120 may include an elastic material configured to be compressed when an external force is applied and to be restored when the application of the external force is released.

In one embodiment, the surface pressure layer 120 may be stacked on at least one surface of the blocking layer 110. In this case, as described above, the surface pressure layer 120 may include a first region 120a in contact with the blocking layer 110 and a second region 120b which is a region other than the first region 120a. In such an embodiment, the first region 120a may refer to a stacking surface of the surface pressure layer 120 in contact with the blocking layer 110.

In one embodiment, the surface pressure layer 120 may include at least one selected from the group consisting of silicon, polyurethane (PU), acrylic, ethylene-propylene diene monomer (EPDM), ethylene vinyl acetate (EVA), isoprene rubber, butadiene-based rubber, chloroprene rubber, and butyl rubber. In one embodiment, the butadiene-based rubber may include at least one selected from the group consisting of butadiene rubber (BR), styrene butadiene rubber (SBR), and acrylonitrile butadiene rubber (NBR). In one embodiment, the surface pressure layer 120 may include silicon. In an exemplary embodiment, the surface pressure layer 120 may be formed of a foamed silicon foam.

In one embodiment, a thickness of the surface pressure layer 120 may be 0.5 mm to 4.0 mm.

In a specific embodiment, the thickness of the surface pressure layer 120 may be 1.0 mm to 3.8 mm, more specifically 1.3 mm to 3.6 mm, more specifically 1.4 mm to 2.0 mm, and more specifically 1.4 mm to 1.8 mm. When the thickness of the surface pressure layer 120 is less than the above-described numerical range, the surface pressure performance of the barrier 100 may be degraded. Meanwhile, when the thickness exceeds the above-described range, the barrier 100 may become too thick, thereby deteriorating the energy efficiency per volume or weight of the battery assembly 10 including the same.

In one embodiment, the thermal conductivity of the surface pressure layer 120 may be 0.1 W/m·K or less.

For example, the thermal conductivity may be measured in the thickness direction of a specimen of the surface pressure layer 120 in accordance with standards such as ISO 22007, ASTM D 5930, or ASTM C 177.

When the thermal conductivity of the surface pressure layer 120 exceeds the above-described numerical range, the barrier 100 as a whole may exhibit a degraded effect in blocking the propagation of heat or flame to adjacent cells when a thermal runaway event occurs in the battery assembly 10.

In one embodiment, a 20% compression force deflection (CFD) of the surface pressure layer 120 may be 23.21 kPa or less.

In one embodiment, the 20% compression force deflection may refer to a compressive force (or a reaction force therefrom) required to deform the surface pressure layer 120 by 20% in the thickness direction. For example, the 20% compression force deflection may be measured by cutting the surface pressure layer 120 into a 50 mm×50 mm specimen and performing a compression test using a universal testing machine (UTM) at a rate of 0.5 mm/min. The same applies hereinafter.

In one embodiment, a 10% compression force deflection of the surface pressure layer 120 may be 16.5 kPa or less.

In one embodiment, a 30% compression force deflection of the surface pressure layer 120 may be 30.91 kPa or less.

In one embodiment, a 40% compression force deflection of the surface pressure layer 120 may be 41.58 kPa or less.

In one embodiment, a 50% compression force deflection of the surface pressure layer 120 may be 60.39 kPa or less.

In one embodiment, a 60% compression force deflection of the surface pressure layer 120 may be 103.62 kPa or less.

In one embodiment, a 70% compression force deflection of the surface pressure layer 120 may be 267.74 kPa or less.

In one embodiment, an 80% compression force deflection of the surface pressure layer 120 may be 1440.01 kPa or less.

Within the above-described numerical ranges, when a swelling phenomenon occurs in at least one of the battery cells 200, the effect of relieving pressure applied to adjacent cells may be further improved.

Meanwhile, as described above, in one embodiment, the surface pressure layer 120 may include a first region 120a in contact with the blocking layer 110 and a second region 120b which is a region other than the first region 120a.

In one embodiment, the protective layer 130 may be stacked on at least a portion of the surface pressure layer 120, and may have thermal insulation, heat resistance, and flame resistance so as to further enhance the heat or flame propagation blocking effect of the barrier 100 and to protect the surface pressure layer 120 from heat or flame. Accordingly, the surface pressure layer 120 may continuously maintain its surface pressure performance even when a thermal runaway phenomenon occurs.

Referring again to FIG. 3, the protective layer 130 may be stacked on at least a portion of the second region 120b of the surface pressure layer 120. As described above, the first region 120a may refer to a region of the surface pressure layer 120 that is in contact with the blocking layer 110, and the second region 120b may refer to a region other than the first region 120a. Meanwhile, in an exemplary embodiment, the first region 120a may refer to a stacking surface of the surface pressure layer 120 that contacts the blocking layer 110, as previously described.

Meanwhile, for example, based on what is illustrated in FIG. 3, the protective layer 130 may be stacked on one surface of the surface pressure layer 120 that faces the first region 120a among the second regions 120b.

In such an embodiment, the second region 120b may be divided into a second-first region 120b-1, which is a region facing the first region 120a, and a second-second region 120b-2, which is a region other than the second-first region 120b-1. In this case, when the first region 120a is defined as one surface of the surface pressure layer 120, the second-first region 120b-1 may be defined as the other surface opposite to the one surface.

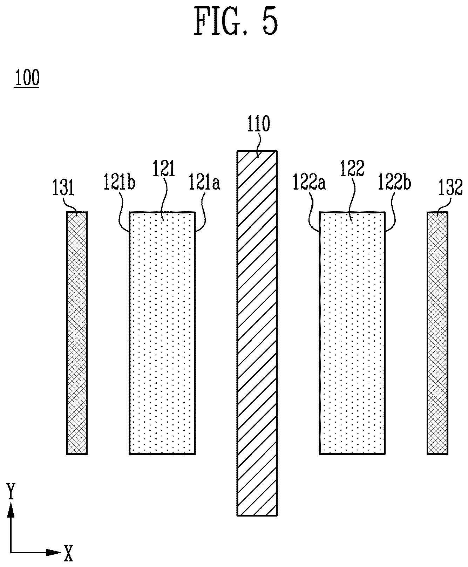

Accordingly, for example, based on what is illustrated in FIG. 3, the blocking layer 110, the surface pressure layer 120, and the protective layer 130 may be sequentially stacked in the X direction (more specifically, in the -X direction with reference to FIG. 3). Meanwhile, such a description may be equally applied to FIG. 5 described below.

Referring again to FIG. 1, in one embodiment, a stacking direction of the plurality of battery cells 200 and the barriers 100 forming the battery cell stack 50 may be an X direction. Accordingly, in one embodiment, the protective layer 130 may be stacked such that it is formed on the outermost surface of the barrier 100, which can contact the adjacent battery cell 200.

In one embodiment, the protective layer 130 of the barrier 100 may be disposed to contact the adjacent battery cell 200. Through such an arrangement, it is possible to prevent the surface pressure layer 120 from being directly exposed to heat or flame generated during a thermal runaway event in the battery assembly 10, and furthermore, the effect of blocking the propagation of heat or flame to adjacent cells can be further improved.

Meanwhile, in FIGS. 2 and 3, the cross-sections of the respective layers are illustrated as rectangular, but this is merely for convenience of explanation. If necessary, the cross-section of each layer may be formed to include at least one of a circle, ellipse, triangle, trapezoid, or parallelogram within a range that does not depart from the definitions of the present disclosure, and at least a portion of each surface may include a curved surface. The same applies to the description of all drawings hereinafter.

In one embodiment, a thickness of the protective layer 130 may be 0.15 mm to 0.5 mm.

In a specific embodiment, a thickness of the protective layer 130 may be 0.2 mm to 0.5 mm, more specifically 0.2 mm to 0.4 mm. When the thickness of the protective layer 130 is less than the above-described numerical range, the effect of blocking heat or flame propagation to adjacent cells or the protection effect for the surface pressure layer 120 may be insignificant when a thermal runaway event occurs in the battery assembly 10. Meanwhile, when the thickness of the protective layer 130 exceeds the above-described numerical range, it is difficult to expect a significant improvement in the propagation blocking or protection effects compared to the increase in thickness or weight of the protective layer 130, which may cause the energy efficiency per volume or weight of the battery assembly 10 including the same to deteriorate.

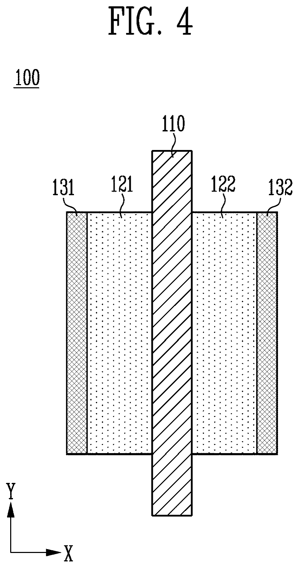

FIG. 4 is a view illustrating an example of a cross-section of the barrier according to another embodiment of the present disclosure.

FIG. 5 is a view illustrating an example in which the cross-section shown in FIG. 4 is exploded and shown by each layer.

Referring to FIGS. 4 and 5, in one embodiment, the surface pressure layer 120 may include a first surface pressure layer 121 and a second surface pressure layer 122 disposed with the blocking layer 110 interposed therebetween. The first surface pressure layer 121 and the second surface pressure layer 122 may respectively include first regions 121a and 122a in contact with the blocking layer 110, and second regions 121b and 122b, which are regions other than the first regions 121a and 122a. The protective layer 130 may include a first protective layer 131 stacked on at least a portion of the second region 121b of the first surface pressure layer 121 and a second protective layer 132 stacked on at least a portion of the second region 122b of the second surface pressure layer 122.

In one embodiment, the surface pressure layer 120 may include the first surface pressure layer 121 and the second surface pressure layer 122, and the first surface pressure layer 121 and the second surface pressure layer 122 may be disposed with the blocking layer 110 interposed therebetween. In such an embodiment, the first surface pressure layer 121 and the second surface pressure layer 122 may be stacked on both opposite surfaces of the blocking layer 110, respectively.

In one embodiment, the thicknesses of the first surface pressure layer 121 and the second surface pressure layer 122 may be the same. However, the present disclosure is not necessarily limited thereto, and the thicknesses of the first surface pressure layer 121 and the second surface pressure layer 122 may be different from each other within the above-described numerical range.

In one embodiment, the first surface pressure layer 121 and the second surface pressure layer 122 may respectively include first regions 121a and 122a in contact with the blocking layer 110, and second regions 121b and 122b which are regions other than the first regions 121a and 122a.

In one embodiment, the first protective layer 131 may be stacked on at least a portion of the second region 121b of the first surface pressure layer 121, and the second protective layer 132 may be stacked on at least a portion of the second region 122b of the second surface pressure layer 122.

In such an embodiment, referring to FIG. 4, the barrier 100 may have a structure in which the first surface pressure layer 121 and the second surface pressure layer 122 are respectively stacked on both surfaces of the blocking layer 110, and the first protective layer 131 and the second protective layer 132 are stacked in the X direction (-X direction and +X direction) on the first surface pressure layer 121 and the second surface pressure layer 122, respectively.

In the above embodiment, the barrier 100 may be disposed such that the first protective layer 131 and the second protective layer 132 are respectively in contact with two adjacent battery cells 200. Through such an arrangement, it is possible to prevent the surface pressure layer 120 from being directly exposed to heat or flame generated during a thermal runaway event in the battery assembly 10, and furthermore, the effect of blocking the propagation of heat or flame to adjacent cells can be further improved.

In addition, the descriptions of the blocking layer 110, the surface pressure layer 120, and the protective layer 130 explained with reference to FIGS. 1 to 3 may be applied without limitation.

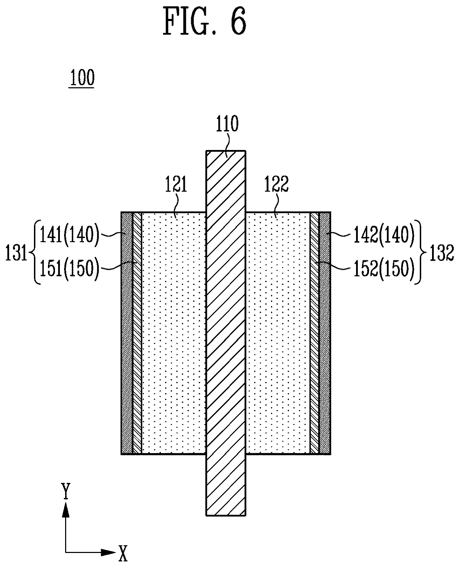

FIG. 6 is a view illustrating an example of a cross-section of the barrier according to still another embodiment of the present disclosure.

In one embodiment, the protective layer 130 may include a flame-retardant layer 140, and the flame-retardant layer 140 may include at least one of an inorganic material fiber and an organic material fiber.

In one embodiment, the flame-retardant layer 140 may be stacked on at least a portion of the surface pressure layer 120, and may have thermal insulation, heat resistance, and flame resistance so as to further enhance the heat or flame propagation blocking effect of the barrier 100 and to protect the surface pressure layer 120 from heat or flame.

In one embodiment, the inorganic material fiber may include at least one selected from the group consisting of silica fiber, alumina fiber, silica-alumina fiber, glass fiber, ceramic fiber, and basalt fiber, and the organic material fiber may include an aramid fiber.

In one embodiment, a thermal conductivity of the flame-retardant layer 140 may be 0.02 W/m·K or less. In a specific embodiment, the thermal conductivity of the flame-retardant layer 140 may be 0.019 W/m·K or less, 0.018 W/m·K or less, or 0.017 W/m·K or less.

For example, the thermal conductivity may be measured in the thickness direction of a specimen of the flame-retardant layer 140 in accordance with standards such as ISO 22007, ASTM D 5930, or ASTM C 177.

When the thermal conductivity of the flame-retardant layer 140 exceeds the above-described numerical range, the propagation blocking effect or the protection effect of the surface pressure layer 120 may be insignificant.

In one embodiment, the protective layer 130 may further include an expansion layer 150, and the expansion layer 150 may include at least one selected from the group consisting of expandable graphite, silicate, and phosphorus-based flame retardant.

In one embodiment, the expansion layer 150 may be stacked on at least a portion of the surface pressure layer 120, and may have thermal insulation, heat resistance, and flame resistance. When exposed to heat or flame, the expansion layer 150 may expand to block a path of heat or flame propagation. Accordingly, the expansion layer 150 may further enhance the effect of blocking the propagation of heat or flame by the barrier 100, protect the surface pressure layer 120 from heat or flame, or quickly compensate for a portion of the surface pressure layer 120 that is partially lost due to heat or flame.

In one embodiment, the expansion layer 150 may include a high-temperature expandable material. In one embodiment, the expansion layer 150 may include at least one selected from the group consisting of expandable graphite, silicate, and phosphorus-based flame retardant as the high-temperature expandable material. The silicate may include at least one selected from the group consisting of sodium silicate, potassium silicate, and lithium silicate.

In one embodiment, the expansion layer 150 may expand to a volume of 300% to 30,000% relative to a volume at room temperature at a temperature of 200°C to 300°C.

In an exemplary embodiment, heat or flame generated during a thermal runaway event may propagate between the battery cells 200 accompanied by a high temperature of 1,000°C to 1,100°C and strong pressure. Meanwhile, the surface pressure layer 120 may exhibit structural deformation at temperatures of 400°C or higher due to material characteristics. Accordingly, within the above-described numerical range, the loss of the surface pressure layer 120 due to a thermal runaway event may be preemptively suppressed, and furthermore, by increasing density through expansion caused by an endothermic reaction, the expansion layer 150 can further enhance the heat or flame propagation blocking effect of the barrier 100.

Referring again to FIGS. 2 to 5, in one embodiment, the protective layer 130 may be stacked on the second region 120b such that the expansion layer 150 is interposed between the flame-retardant layer 140 and the surface pressure layer 120.

In one embodiment, a thickness of the flame-retardant layer 140 may be 0.1 mm to 0.4 mm.

In a specific embodiment, the thickness of the flame-retardant layer 140 may be 0.15 mm to 0.35 mm, more specifically 0.18 mm to 0.3 mm, and more specifically 0.2 mm to 0.3 mm. When the thickness of the flame-retardant layer 140 is less than the above-described numerical range, the effect of blocking the propagation of heat or flame to adjacent cells or the protection effect for the surface pressure layer 120 during a thermal runaway event in the battery assembly 10 may be insignificant. Meanwhile, when the thickness of the flame-retardant layer 140 exceeds the above-described numerical range, it may be difficult to expect a significant improvement in the propagation blocking effect or protection effect compared to the increase in the thickness or weight of the flame-retardant layer 140, which may result in deterioration of the energy efficiency per volume or weight of the battery assembly 10 including the same.

In one embodiment, a thickness of the expansion layer 150 may be 0.02 mm to 0.1 mm.

In a specific embodiment, the thickness of the expansion layer 150 may be 0.03 mm to 0.08 mm, more specifically 0.04 mm to 0.07 mm, and more specifically 0.04 mm to 0.06 mm. When the thickness of the expansion layer 150 is less than the above-described numerical range, the effect of blocking heat or flame propagation to adjacent cells or the protection effect for the surface pressure layer 120 during a thermal runaway event may be insignificant. Meanwhile, when the thickness of the expansion layer 150 exceeds the above-described numerical range, it may be difficult to expect a significant improvement in the propagation blocking or protection effects compared to the increase in the thickness or weight of the expansion layer 150, which may cause deterioration in the energy efficiency per volume or weight of the battery assembly 10 including the same.

Referring again to FIG. 6, in one embodiment, the surface pressure layer 120 may include a first surface pressure layer 121 and a second surface pressure layer 122 disposed with the blocking layer 110 interposed therebetween, and first and second protective layers 131 and 132 may be stacked on the first and second surface pressure layers 121 and 122, respectively, as described above.

In one embodiment, the first protective layer 131 may include a first flame-retardant layer 141 and a first expansion layer 151, and the first expansion layer 151 may be stacked on the second region 121b of the first surface pressure layer 121 such that it is interposed between the first flame-retardant layer 141 and the first surface pressure layer 121.

In one embodiment, the second protective layer 132 may include a second flame-retardant layer 142 and a second expansion layer 152, and the second expansion layer 152 may be stacked on the second region 122b of the second surface pressure layer 122 such that it is interposed between the second flame-retardant layer 142 and the second surface pressure layer 122.

In one embodiment, the first protective layer 131 may include the first flame-retardant layer 141 and the first expansion layer 151, which is interposed between the first flame-retardant layer 141 and the first surface pressure layer 121 and stacked on the second region 121b of the first surface pressure layer 121, and the second protective layer 132 may include the second flame-retardant layer 142 and the second expansion layer 152, which is interposed between the second flame-retardant layer 142 and the second surface pressure layer 122 and stacked on the second region 122b of the second surface pressure layer 122.

In such an embodiment, referring to FIG. 6, the barrier 100 may have a structure in which the first surface pressure layer 121 and the second surface pressure layer 122 are respectively stacked on both surfaces of the blocking layer 110, the first expansion layer 151 and the second expansion layer 152 are stacked in the X direction (-X direction and +X direction) on the first surface pressure layer 121 and the second surface pressure layer 122, respectively, and the first flame-retardant layer 141 and the second flame-retardant layer 142 are stacked in the X direction (-X direction and +X direction) on the first expansion layer 151 and the second expansion layer 152, respectively.

In the above embodiment, the barrier 100 may be disposed such that the first flame-retardant layer 141 and the second flame-retardant layer 142 are respectively in contact with two adjacent battery cells 200, the first expansion layer 151 is interposed between the first flame-retardant layer 141 and the first surface pressure layer 121, and the second expansion layer 152 is interposed between the second flame-retardant layer 142 and the second surface pressure layer 122. Through such an arrangement, it is possible to prevent the surface pressure layer 120 from being directly exposed to heat or flame generated during a thermal runaway event in the battery assembly 10, and furthermore, to further improve the effect of blocking the propagation of heat or flame to adjacent cells.

Meanwhile, through such an arrangement, it is possible to minimize the increase in the thickness of the barrier 100, simplify the structure, and at the same time secure excellent heat or flame blocking performance and swelling mitigation performance, thereby improving the safety, stability, manufacturability, and economic efficiency of the battery assembly 10.

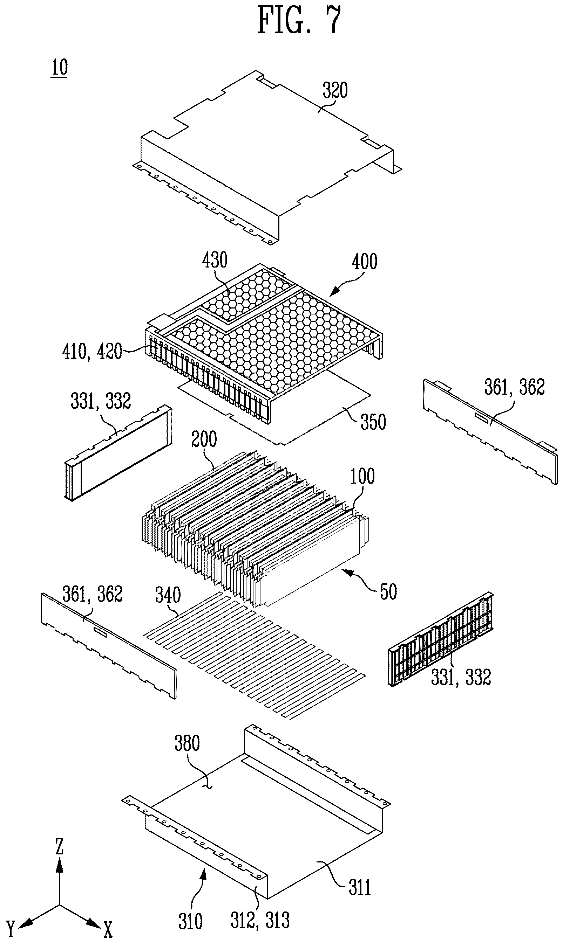

FIG. 7 is a view illustrating an example of a battery assembly according to one embodiment of the present disclosure.

Referring to FIG. 7, in one embodiment, the battery assembly 10 may include a plurality of stacked battery cells 200; a barrier 100 disposed between at least one pair of adjacent battery cells 200 among the plurality of battery cells 200; and a receiving case 300 that accommodates the plurality of battery cells 200 and the barriers 100.

Referring to FIG. 7, the plurality of stacked battery cells 200 may be stacked along a predetermined stacking direction. Meanwhile, at least one barrier 100 may be disposed between at least one pair of adjacent battery cells 200 among the plurality of battery cells 200. Such a stack of the battery cells 200 and the barriers 100 may be defined as a battery cell stack 50.

For example, based on what is illustrated in FIG. 1, a stacking direction of the plurality of battery cells 200 and the barriers 100 forming the battery cell stack 50 may be an X direction.

The descriptions of the battery cells 200 and the barriers 100 explained with reference to FIGS. 1 to 6 may be applied without limitation.

Meanwhile, the receiving case 300 may be configured to accommodate the battery cell stack 50.

In one embodiment, the receiving case 300 may include a receiving body 310 that forms a part of a receiving space 380 for accommodating the plurality of battery cells 200 and the barriers 100, and a receiving cover 320 coupled to the receiving body 310 to together form the receiving space 380.

In one embodiment, the receiving case 300 may include an open upper surface, and may further include the receiving body 310 configured to accommodate the battery cell stack 50 through the opened upper surface, and the receiving cover 320 coupled to the receiving body 310 to close the opened upper surface.

Accordingly, the receiving cover 320 may be coupled to the receiving body 310 to form an upper surface of the receiving space 380 or an upper surface of the receiving case 300. That is, the receiving cover 320 may be coupled to the receiving body 310 to close the opened upper surface and to form the receiving space 380 together with the receiving body 310.

In one embodiment, the receiving space 380 may be formed inside the receiving body 310 and may include a space for accommodating the battery cell stack 50.

In one embodiment, the receiving body 310 may have a channel shape or a "U"-shaped structure with an open upper portion. Referring to FIG. 7, both side surfaces of the receiving body 310 facing each other along the X direction may also be open.

In one embodiment, the receiving body 310 may include a body bottom surface 311 that forms a bottom surface of the receiving space 380, and body side surfaces 312 and 313 that extend from edges (not shown) of the body bottom surface 311 arranged parallel to each other along the X direction toward the receiving cover 320. Free ends of the body side surfaces 312 and 313 may be bent to form flanges (not shown). This can facilitate coupling with the receiving cover 320.

Meanwhile, referring to FIG. 7, in the above embodiments, the term "upper" may mean, without limitation, one side in the Z direction, that is, a position located in the +Z direction based on FIG. 7.

In one embodiment, the battery assembly 10 may further include other components necessary for the operation of the battery assembly 10, in addition to the battery cells 200, the barriers 100, and the receiving case 300.

Referring again to FIG. 7, in one embodiment, the battery assembly 10 may further include end plates 331 and 332 at both ends of the battery cell stack 50 along the X direction.

In a specific embodiment, the end plates 331 and 332 may be provided at both ends of the battery cell stack 50 or may be connected to both side surfaces of the receiving body 310.

In one embodiment, the end plates 331 and 332 may be configured to prevent both side surfaces of the battery cell stack 50 from being exposed to the outside.

In one embodiment, the battery assembly 10 may include a busbar electrically connected to the plurality of battery cells 200.

In one embodiment, the battery assembly 10 may further include busbar frames 410 and 420 that support the busbar and the plurality of battery cells 200.

In one embodiment, the structure including the busbar and the busbar frames 410 and 420 may be referred to as a busbar assembly 400.

In such a case, the busbar assembly 400 may include a busbar that is electrically connected to the plurality of battery cells 200.

In one embodiment, the busbar assembly 400 may be electrically connected to the outside so as to store (or charge) electrical energy in the plurality of battery cells 200, or to supply (or discharge) the electrical energy stored in the plurality of battery cells 200 to the outside.

Furthermore, the busbar assembly 400 may perform a function of additionally supporting the battery cell stack 50 in the Z direction, specifically as shown in FIG. 7.

In one embodiment, the busbar assembly 400 may include a first busbar frame 410 and a second busbar frame 420 extending along the X direction with the battery cell stack 50 interposed therebetween.

In one embodiment, the busbar assembly 400 may further include a support frame 430 located at one side of the busbar assembly 400 and connecting the first busbar frame 410 and the second busbar frame 420.

In one embodiment, the support frame 430 may be configured to prevent deformation of and support the first busbar frame 410 and the second busbar frame 420.

Furthermore, in one embodiment, the support frame 430 may be configured to support the battery cell stack 50 in the Z direction.

In one embodiment, a part of an electrical device for sensing and controlling the plurality of battery cells 200 may be disposed on the support frame 430.

In FIG. 1, an example is illustrated in which the lead tab portions 221 and 222 of the battery cells 200 are formed in mutually opposite directions; however, the present disclosure is not limited thereto.

If necessary, the lead tab portions 221 and 222 of the battery cells 200 may be formed in the same direction.

In this case, the busbar frames 410 and 420 may be positioned at one side of the battery cells 200, for example, at an upper side of the battery cells 200, to be electrically connected thereto.

Referring to FIG. 7, in one embodiment, the busbar assembly 400 may have a tunnel-shaped structure.

In one embodiment, the support frame 430 may be connected to the first busbar frame 410 and the second busbar frame 420 to cover at least a portion of the battery cell stack 50 in the Z direction.

Alternatively, the support frame 430 may be configured to cover all of the plurality of battery cells 200 in the Z direction.

In one embodiment, the busbar may include a first busbar supported by the first busbar frame 410 and electrically connected to one of the lead tab portions of the battery cells 200, and a second busbar supported by the second busbar frame 420 and electrically connected to the other of the lead tab portions of the battery cells 200.

In one embodiment, the first busbar and the second busbar may be positioned in directions away from the plurality of battery cells 200 relative to the first busbar frame 410 and the second busbar frame 420, respectively.

That is, the first busbar and the second busbar may be positioned closer to the body side surfaces 312 and 313 than to the first busbar frame 410 and the second busbar frame 420.

In this case, each lead tab portion of the battery cells 200 may be inserted into slit holes (not shown) formed in the first busbar frame 410 and the second busbar frame 420 to be electrically connected to the first busbar and the second busbar.

However, the present disclosure is not necessarily limited thereto, and each lead tab portion may be electrically connected to the first and second busbars in a manner different from the above-described method if necessary.

In one embodiment, the battery assembly 10 may include insulating covers 361 and 362 interposed between the receiving case (specifically, the receiving body 310) and the busbar assembly 400 with reference to the Y direction of FIG. 7.

In one embodiment, the insulating covers 361 and 362 may be configured to block electrical connection between the busbar or the busbar assembly 400 and the receiving case 300.

For this purpose, the insulating covers 361 and 362 may have electrical insulating properties.

In one embodiment, each of the insulating covers 361 and 362 may be positioned in a direction away from the battery cells 200 relative to the first and second busbars.

That is, each of the insulating covers 361 and 362 may be positioned closer to the body side surfaces 312 and 313 than to the first and second busbars.

Referring to FIG. 7, in one embodiment, the battery assembly 10 may include a sheet-shaped cover pad 350 positioned between the support frame 430 and the battery cell stack 50 to further suppress propagation of heat or flame in the Z direction when a thermal runaway event occurs in at least one of the plurality of battery cells 200.

In one embodiment, the cover pad 350 may have thermal insulation, heat resistance, electrical insulation, and flame resistance so as to perform a function of suppressing the propagation of heat or flame.

In one embodiment, the cover pad 350 may include at least one of fiber (wool), an insulating polymer, or an inorganic material.

In one embodiment, the battery assembly 10 may further include a heat dissipation portion 340 positioned between the body bottom surface 311 and the battery cell stack 50 to transfer heat generated from the plurality of battery cells 200 to the outside of the battery assembly 10.

In one embodiment, the heat dissipation portion 340 may include an adhesive material having thermal conductivity.

In one embodiment, the heat dissipation portion 340 may adhere the plurality of battery cells 200 to the body bottom surface 311.

For this purpose, the heat dissipation portion 340 may be formed by spraying or coating a liquid composition onto the body bottom surface 311 and then curing it, or it may be formed as a soft or hard sheet.

Meanwhile, FIG. 7 is provided for convenience of explanation, and although the battery assembly 10 is illustrated as an example of a battery module structure, this is merely exemplary.

The battery assembly 10 according to the present disclosure is not limited thereto and may be applied without limitation to a battery pack structure in which the module structure or a similar type of module structure shown in FIG. 7 is combined, as well as to a cell-to-pack

(CTP) structure having a configuration of battery cells 200, barriers 100, and a case, but omitting a conventional battery module structure and being directly accommodated in the form of a pack.

A battery assembly according to one embodiment of the present disclosure may be preferably used as a power source for small devices as well as for medium and large devices.

Examples of the small devices may include mobile phones, notebook computers, and cameras, and examples of the medium and large devices may include electric vehicles, hybrid electric vehicles, plug-in hybrid electric vehicles, and power storage systems, but are not limited thereto.

It is understood by those skilled in the art that the plurality of exemplary embodiments described above are specific examples of the following aspects.

Aspect 1: A battery assembly comprising: at least two battery cells; and a barrier disposed between the two battery cells, wherein the barrier comprises a sheet-shaped blocking layer, a surface pressure layer stacked on at least one surface of the blocking layer, the surface pressure layer comprises a first region in contact with the blocking layer and a second region which is a region other than the first region and a protective layer stacked on at least a portion of the second region.

Aspect 2: The battery assembly of Aspect 1, wherein the protective layer has a thickness of about 0.15 mm to about 0.5 mm.

Aspect 3: The battery assembly of any one of previous Aspects, wherein the protective layer comprises a flame-retardant layer, and the flame-retardant layer has a thickness of about 0.1 mm to about 0.4 mm

Aspect 4: The battery assembly of any one of previous Aspects, wherein (a) the flame-retardant layer comprises at least one of an inorganic material fiber selected from the group consisting of silica fiber, alumina fiber, silica-alumina fiber, glass fiber, ceramic fiber, basalt fiber, and any combination thereof and an organic material fiber comprising an aramid fiber, and/or (b) a thermal conductivity of the flame-retardant layer is about 0.02 W/m·K or less.

Aspect 5: The battery assembly of any one of previous Aspects, wherein the protective layer comprises an expansion layer comprising a material selected from the group consisting of expandable graphite, a silicate, phosphorus-based flame retardant, or any combination thereof.

Aspect 6: The battery assembly of any one of previous Aspects, wherein (a) the expansion layer has a thickness of about 0.02 mm to about 0.1 mm, and/or (b) the expansion layer expands to a volume 300% to 30,000% relative to its volume at room temperature when exposed to a temperature of 200°C to 300°C.

Aspect 7: The battery assembly of any one of previous Aspects, wherein (a) a thermal conductivity of the surface pressure layer is about 0.1 W/m·K or less, and/or (b) the surface pressure layer has a 20% compression force deflection (CFD) of about 23.21 kPa or less, and/or (c) the surface pressure layer has a thickness of about 0.5 mm to about 4.0 mm.

Aspect 8: The battery assembly of any one of previous Aspects, wherein the blocking layer comprises one or both of a fiber and an inorganic material.

Aspect 9: The battery assembly of any one of previous Aspects, wherein the blocking layer has a thickness of about 0.1 mm to about 1.5 mm.

Aspect 10: The battery assembly of any one of previous Aspects, wherein the surface pressure layer comprises a material from the group consisting of silicon, polyurethane (PU), acrylic, ethylene-propylene diene monomer (EPDM), ethylene vinyl acetate (EVA), isoprene rubber, butadiene-based rubber, chloroprene rubber, butyl rubber, and any combination thereof, preferably, the surface pressure layer comprises foamed silicon.

Aspect 11: The battery assembly of any one of previous Aspects, wherein the combined thickness of the blocking layer, protective layer, and surface pressure layer is about 1.0 mm to about 5.5 mm.

Aspect 12: The battery assembly of any one of previous Aspects, wherein the surface pressure layer is a first surface pressure layer, the protective layer is a first protective layer, the blocking layer is disposed between the first surface pressure layer and a second surface pressure layer, and the second surface pressure layer is disposed between the blocking layer and a second protective layer.

Aspect 13: The battery assembly of Aspect 12, further comprising a third protective layer disposed between the first surface pressure layer and the blocking layer, and a fourth protective layer disposed between the blocking layer and the second surface pressure layer.

Aspect 14: A method of reducing the risk of thermal runaway in a battery assembly, the method comprising interposing a barrier between a two battery cells of the battery assembly, wherein the barrier comprises a sheet-shaped blocking layer, a surface pressure layer stacked on at least one surface of the blocking layer, the surface pressure layer comprises a first region in contact with the blocking layer and a second region which is a region other than the first region and a protective layer stacked on at least a portion of the second region.

Aspect 15: The method of Aspect 14, wherein the combined thickness of the blocking layer, protective layer, and surface pressure layer is about 1.0 mm to about 5.5 mm.

Hereinafter, specific experimental examples will be described to further explain the embodiments of the present disclosure.

The embodiments and comparative examples included in the experimental examples are merely illustrative of the invention and are not intended to limit the appended claims. It will be apparent to those skilled in the art that various changes and modifications may be made to the embodiments within the scope and spirit of the present disclosure, and such changes and modifications are of course included within the scope of the appended claims.

### Example

### (Example 1)

Two woven ceramic fiber sheets having a thickness of 0.25 mm were prepared.

An expansion graphite layer having a thickness of 0.05 mm was coated on one surface of each prepared ceramic fiber sheet, and a silicone foam layer having a thickness of 1.65 mm was foamed on the coated surface to prepare two stacked bodies.

The two stacked bodies thus prepared were bonded to both surfaces of a mica sheet having a thickness of 0.7 mm to prepare a barrier having a total thickness of 4.6 mm.

At this time, the silicone foam layers of each stacked body were attached so as to be joined to both surfaces of the mica sheet.

### (Example 2)

Two woven ceramic fiber sheets having a thickness of 0.25 mm were prepared.

An expansion graphite layer having a thickness of 0.05 mm was coated on one surface of each prepared ceramic fiber sheet, and a silicone foam layer having a thickness of 1.35 mm was foamed on the coated surface to prepare two first stacked bodies.

Then, two additional ceramic fiber sheets having a thickness of 0.25 mm were prepared, and an expansion graphite layer having a thickness of 0.05 mm was coated on one surface of each prepared ceramic fiber sheet to prepare two second stacked bodies.

The two second stacked bodies thus prepared were bonded to the two previously prepared first stacked bodies, respectively, to prepare two stacked bodies.

At this time, each first stacked body was attached such that the silicone foam layer of the first stacked body was in contact with the coated surface of the second stacked body.

The two stacked bodies thus prepared were bonded to both surfaces of a mica sheet having a thickness of 0.7 mm to prepare a barrier having a total thickness of 4.6 mm.

At this time, the ceramic fiber layers of each stacked body were attached so as to be joined to both surfaces of the mica sheet.

### (Comparative Example)

A barrier having a total thickness of 4.6 mm was prepared by foaming a silicone foam layer having a thickness of 1.95 mm on each surface of a mica sheet having a thickness of 0.7 mm.

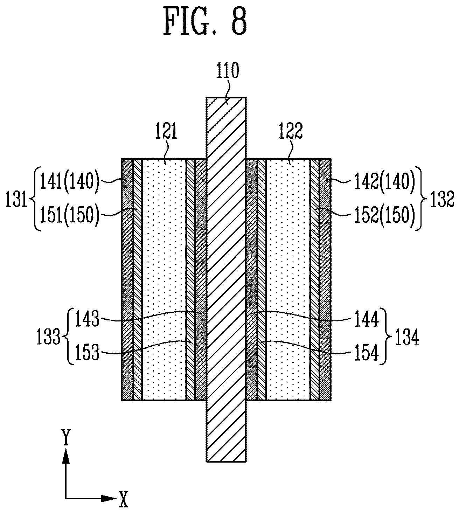

FIG. 8 is a view illustrating an example of a cross-section of the barrier according to Example 2, wherein a first surface pressure layer 121 and a second surface pressure layer 122 is disposed with the blocking layer 110 interposed therebetween. A first protective layer 131 may be stacked on at least a portion of the first surface pressure layer 121 and a second protective layer 132 may be stacked on at least a portion of the second surface pressure layer 122. A third protective layer 133 may be disposed between at least a portion of the first surface pressure layer 121 and the blocking layer 110, and the third protective layer 133 may include a third flame-retardant layer 143 and a third expansion layer 153; and a fourth protective layer 134 may be disposed between at least a portion of the second surface pressure layer 122, and the forth protective layer 134 may include a fourth flame-retardant layer 144 and a fourth expansion layer 154; and the blocking layer 110. In one embodiment, the first protective layer 131 may include a first flame-retardant layer 141 and a first expansion layer 151, and the first expansion layer 151 may be stacked on the second region 121b of the first surface pressure layer 121 such that it is interposed between the first flame-retardant layer 141 and the first surface pressure layer 121. Each of the protective layers 131, 132, 133, 134 may include a flame-retardant layer 141, 142, 143, 144 and an expansion layer 151,152,153, 154.

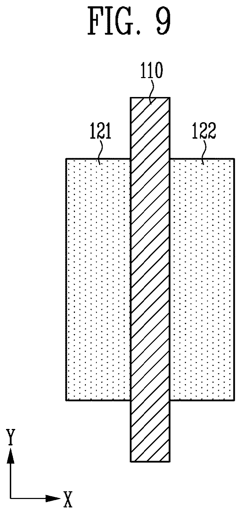

FIG. 9 is a view illustrating an example of a cross-section of the barrier according to a Comparative Example, wherein a first surface pressure layer 121 and a second surface pressure layer 122 is disposed with the blocking layer 110 interposed therebetween. No protective layer is present.

An example of a cross-section of the barrier according to Example 1 may refer to the aspect shown in FIG. 6.

Meanwhile, an example of a cross-section of the barrier according to Example 2 may refer to the aspect shown in FIG. 8, and an example of a cross-section of the barrier according to the Comparative Example may refer to the aspect shown in FIG. 9.

### Evaluation Example: Heat and flame blocking performance evaluation

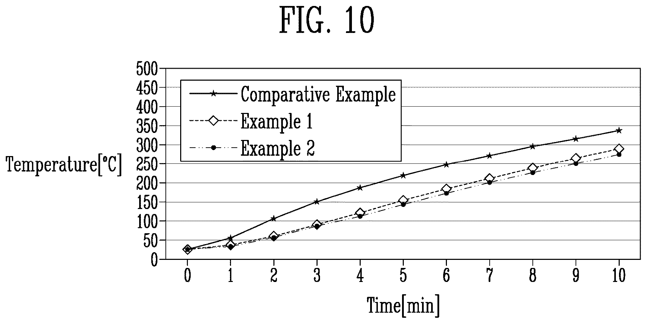

FIG. 10 is a graph showing test results comparing rear surface temperatures of the barriers of the Examples and the Comparative Example.

A back-surface temperature comparison test was performed on the barriers of Examples 1 and 2 and the barrier of the Comparative Example.

Specifically, a butane gas torch (100 kPa) was used to apply a flame at a temperature of 900°C toward one surface (front surface) of each barrier for 10 minutes from a position spaced 140 mm apart from the front surface of each barrier.

The temperature on the opposite surface (back surface) of each pad was then measured.

The back-surface temperatures measured over time are shown in FIG. 10 and Table 1 below.

(The unit of the temperature values recorded for each time interval is °C.)

**[Table 1]**

| | 0 min | 1 min | 2 min | 3 min | 4 min | 5 min | 6 min | 7 min | 8 min | 9 min | 10 min |
|---|---|---|---|---|---|---|---|---|---|---|---|
| Example 1 | 25 | 36 | 59 | 90 | 120 | 153 | 183 | 211 | 238 | 264 | 289 |
| Example 2 | 25 | 33 | 56 | 86 | 112 | 143 | 172 | 200 | 226 | 250 | 274 |
| Comparative Example | 25 | 55 | 106 | 150 | 186 | 218 | 247 | 271 | 295 | 315 | 337 |

Referring to FIG. 10 and Table 1, it was confirmed that the barrier according to one embodiment of the present disclosure exhibited significantly superior heat and flame blocking performance compared to the barrier of the Comparative Example.

Meanwhile, although the barrier of Example 2 included an additional protective layer interposed between the surface pressure layer and the blocking layer compared to the barrier of Example 1, it was confirmed that the heat and flame blocking performance of the barrier of Example 2 was not significantly different from that of the barrier of Example 1.

This is considered to be due to the fact that the protective layer applied to the outermost surface plays a major role in improving the overall heat and flame blocking performance.

Accordingly, it was confirmed that the barrier according to one embodiment of the present disclosure can minimize an increase in thickness, simplify the structure, and still exhibit excellent heat or flame blocking performance.

The above description is merely an example applying the principle of the present disclosure, and other configurations may be additionally included within the scope without departing from the spirit of the present disclosure.

## Claims

1. A battery assembly comprising:
at least two battery cells; and
a barrier disposed between the two battery cells,
wherein the barrier comprises a sheet-shaped blocking layer,
a surface pressure layer stacked on at least one surface of the blocking layer, the surface pressure layer comprises a first region in contact with the blocking layer and a second region which is a region other than the first region and
a protective layer stacked on at least a portion of the second region.

2. The battery assembly of claim 1, wherein the protective layer has a thickness of about 0.15 mm to about 0.5 mm.

3. The battery assembly of any one of previous claims, wherein the protective layer comprises a flame-retardant layer, and the flame-retardant layer has a thickness of about 0.1 mm to about 0.4 mm.

4. The battery assembly of any one of previous claims, wherein (a) the flame-retardant layer comprises at least one of an inorganic material fiber selected from the group consisting of silica fiber, alumina fiber, silica-alumina fiber, glass fiber, ceramic fiber, basalt fiber, and any combination thereof and an organic material fiber comprising an aramid fiber, and/or (b) a thermal conductivity of the flame-retardant layer is about 0.02 W/m·K or less.

5. The battery assembly of any one of previous claims, wherein the protective layer comprises an expansion layer comprising a material selected from the group consisting of expandable graphite, a silicate, phosphorus-based flame retardant, or any combination thereof.

6. The battery assembly of any one of previous claims, wherein (a) the expansion layer has a thickness of about 0.02 mm to about 0.1 mm, and/or (b) the expansion layer expands to a volume 300% to 30,000% relative to its volume at room temperature when exposed to a temperature of 200°C to 300°C.

7. The battery assembly of any one of previous claims, wherein (a) a thermal conductivity of the surface pressure layer is about 0.1 W/m·K or less, and/or (b) the surface pressure layer has a 20% compression force deflection (CFD) of about 23.21 kPa or less, and/or (c) the surface pressure layer has a thickness of about 0.5 mm to about 4.0 mm.

8. The battery assembly of any one of previous claims, wherein the blocking layer comprises one or both of a fiber and an inorganic material.

9. The battery assembly of any one of previous claims, wherein the blocking layer has a thickness of about 0.1 mm to about 1.5 mm.

10. The battery assembly of any one of previous claims, wherein the surface pressure layer comprises a material from the group consisting of silicon, polyurethane (PU), acrylic, ethylene-propylene diene monomer (EPDM), ethylene vinyl acetate (EVA), isoprene rubber, butadiene-based rubber, chloroprene rubber, butyl rubber, and any combination thereof, preferably, the surface pressure layer comprises foamed silicon.

11. The battery assembly of any one of previous claims, wherein the combined thickness of the blocking layer, protective layer, and surface pressure layer is about 1.0 mm to about 5.5 mm.

12. The battery assembly of any one of previous claims, wherein the surface pressure layer is a first surface pressure layer, the protective layer is a first protective layer, the blocking layer is disposed between the first surface pressure layer and a second surface pressure layer, and the second surface pressure layer is disposed between the blocking layer and a second protective layer.

13. The battery assembly of claim 12, further comprising a third protective layer disposed between the first surface pressure layer and the blocking layer, and a fourth protective layer disposed between the blocking layer and the second surface pressure layer.

14. A method of reducing the risk of thermal runaway in a battery assembly, the method comprising interposing a barrier between a two battery cells of the battery assembly, wherein the barrier comprises a sheet-shaped blocking layer, a surface pressure layer stacked on at least one surface of the blocking layer, the surface pressure layer comprises a first region in contact with the blocking layer and a second region which is a region other than the first region and a protective layer stacked on at least a portion of the second region.

15. The method of claim 14, wherein the combined thickness of the blocking layer, protective layer, and surface pressure layer is about 1.0 mm to about 5.5 mm.
